# EUROPEAN PATENT APPLICATION

(11) **EP 4 586 705 A1**
(43) Date of publication of application: **16.07.2025**
(21) Application number: 23870161.9
(22) Date of filing: 01.09.2023
(51) Int. Cl.: H04W 56/00

(54) **COMMUNICATION METHOD AND COMMUNICATION APPARATUS**

(30) Priority: 27.09.2022 CN 202211185953
(71) Applicant: Huawei Technologies Co., Ltd., Shenzhen, Guangdong 518129 (CN)
(72) Inventor: CHEN, Ying, Shenzhen, Guangdong 518129 (CN); GUO, Zhiheng, Shenzhen, Guangdong 518129 (CN); ZHAO, Feiran, Shenzhen, Guangdong 518129 (CN); TIE, Xiaolei, Shenzhen, Guangdong 518129 (CN); WANG, Jun, Shenzhen, Guangdong 518129 (CN)
(74) Representative: Körber, Martin Hans
(86) International application number: PCT/CN2023/116539
(87) International publication number: WO 2024/066921

(57) **Abstract**

This application provides a communication method and a communication apparatus. The method includes: A terminal device sends first indication information, where the first indication information indicates first duration, and the first duration includes duration in which the terminal device does not perform open-loop timing advance adjustment and/or open-loop frequency offset adjustment; the terminal device receives second indication information, where the second indication information indicates a first window, the first window is determined based on the first duration, and the first window is used for channel estimation; and the terminal device reports, to a network device by sending the first indication information, the duration in which the terminal device does not perform open-loop timing advance adjustment and/or open-loop frequency offset adjustment, so that the network device can accurately configure the first window. This avoids adverse impact of open-loop timing advance adjustment and/or open-loop frequency offset adjustment of the terminal device on channel estimation, thereby improving accuracy of channel estimation.

## Description

This application claims priority to Chinese Patent Application No. 202211185953.0, filed with the China National Intellectual Property Administration on September 27, 2022 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

Compared with terrestrial communication, satellite communication has its unique advantages. For example, satellite communication can provide a wider coverage range, and satellite base stations are not vulnerable to natural disasters or external forces. If satellite communication is introduced into a fifth generation (5th generation, 5G) system and a future evolved network, communication services can be provided for areas that cannot be covered by a terrestrial communication network such as oceans and forests; reliability of 5G communication can be enhanced, for example, better communication services are ensured for air planes, trains, and users on these transportation means; and more data transmission resources are provided for 5G communication, and a network rate is improved. Therefore, supporting both terrestrial communication and satellite communication is an inevitable trend of future 5G communication, and has great benefits in terms of wide coverage, reliability, multi-connection, a high throughput, and the like.

Currently, satellite communication has been introduced in a 3GPP standard, and is used as a communication scenario of 5G communication. In the standard, to adapt to features of a large delay and high mobility of satellite communication, technologies such as timing, synchronization, and HARQ are enhanced. If satellite communication is required to further support direct connection between a mobile phone and a satellite, coverage enhancement needs to be performed. This is because transmit power and a quantity of antennas of the mobile phone are limited, and a communication distance of satellite communication is long and a path loss is large. Consequently, a link budget is low, and further coverage enhancement is required to implement direct connection between the mobile phone and the satellite. The content in the present invention is related to a coverage enhancement technology and a joint channel estimation technology.

In joint channel estimation, some conditions need to be met. To be specific, phases of a plurality of signals corresponding to joint channel estimation need to be continuous during transmission, and power of the signals need to be consistent. Otherwise, performance of joint channel estimation is affected. When events such as uplink and downlink switching and timing advance adjustment occur, phase continuity or power stability may be damaged. In this case, joint channel estimation cannot be performed during occurrence of these events.

In an implementation process of joint channel estimation, a network side configures, based on a capability reported by a terminal and a data scheduling manner, a joint channel estimation window, which is generally referred to as a TDW (time domain window). The TDW may be classified into a nominal (nominal) TDW and an actual (actual) TDW, which are referred to as an N-TDW and an A-TDW below for brevity of description. Generally, the N-TDW is configured on the network side. However, in an actual case, due to a plurality of events, joint channel estimation fails to be performed based on a size of the N-TDW, for example, discontinuous signal sending, uplink and downlink switching, and timing advance adjustment. These events trigger the N-TDW to be split into a plurality of small A-TDWs. Once these events occur, a previous A-TDW is ended, and a new A-TDW is started. Therefore, a window size actually used for joint channel estimation is the A-TDW. Different joint channel estimation is performed between different A-TDWs.

A terminal device UE autonomously performs timing advance adjustment, that is, open-loop timing advance adjustment, based on an ephemeris and a location of the UE. The network side cannot learn when the UE performs open-loop timing advance adjustment or how long the UE may not perform open-loop timing advance adjustment. If open-loop timing advance adjustment is performed in the A-TDW, accuracy of joint channel estimation is affected. In addition, it should be noted that the UE cannot perform open-loop frequency offset adjustment in the A-TDW.

Therefore, in satellite communication, how to configure the joint channel estimation window TDW when open-loop timing advance adjustment and/or open-loop frequency offset adjustment need/needs to be performed becomes an urgent problem to be resolved.

### SUMMARY

This application provides a communication method and a communication apparatus, to configure an accurate joint channel estimation window TDW when open-loop timing advance adjustment and/or open-loop frequency offset adjustment need/needs to be performed.

According to a first aspect, a communication method is provided. The method may be performed by a terminal device, or may be performed by a chip or a circuit configured in the terminal device. This is not limited in this application.

The method may include: A terminal device sends first indication information, where the first indication information indicates first duration, and the first duration includes duration in which the terminal device does not perform open-loop timing advance adjustment and/or open-loop frequency offset adjustment; and the terminal device receives second indication information, where the second indication information indicates a first window, the first window is determined based on the first duration, and the first window is used for channel estimation.

According to the solution provided in this application, the terminal device reports, to a network device by sending the first indication information, the duration in which the terminal device does not perform open-loop timing advance adjustment and/or open-loop frequency offset adjustment, so that the network device can accurately configure the first window. In the first window, the terminal device may not perform open-loop timing advance adjustment and/or open-loop frequency offset adjustment, thereby avoiding adverse impact of open-loop timing advance adjustment and/or open-loop frequency offset adjustment of the terminal device on channel estimation. This solution can resolve a problem in a conventional standard that the network device cannot configure the accurate first window when the network device cannot learn of open-loop timing advance adjustment and/or open-loop frequency offset adjustment of the terminal device, thereby improving accuracy of channel estimation.

In a possible implementation, the terminal device may be a network device in a wireless communication system, and may be any device having a wireless transceiver function.

In a possible implementation, the network device may be a network device in a wireless communication system, and may be any device having a wireless transceiver function.

With reference to the first aspect, in some implementations of the first aspect, the first window includes at least one second window.

In a possible implementation, the second window is used for channel estimation, and the second window is determined based on the first duration; and a time period other than the second window in the first window further includes a time period used for open-loop timing advance adjustment and/or open-loop frequency offset adjustment.

In another possible implementation, the first window configured on a network side may alternatively be a minimum window in which time/frequency offsets of all terminal devices in a cell do not change.

In this implementation, in a possible implementation, the first indication information reported by the terminal device may indicate deviation of the time/frequency offset of the terminal device relative to the first window. In this case, actual first duration is a size of the first window plus the deviation.

According to a second aspect, a communication method is provided. The method may be performed by a terminal device, or may be performed by a chip or a circuit configured in the terminal device. This is not limited in this application.

The method may include: A terminal device sends first indication information, where the first indication information indicates first duration, and the first duration is duration in which the terminal device does not perform open-loop timing advance adjustment and/or open-loop frequency offset adjustment; the terminal device receives fourth indication information, where the fourth indication information indicates a configuration of a first window, the first window is used for channel estimation, and the first window is divided into at least one second window based on the first duration; the second window is used for channel estimation; and a time period other than the second window in the first window further includes a time period used for open-loop timing advance adjustment and/or open-loop frequency offset adjustment.

According to the solution provided in this application, the terminal device reports, to the network device by sending the first indication information, the duration in which the terminal device does not perform open-loop timing advance adjustment and/or open-loop frequency offset adjustment, so that the network device can accurately configure the first window. In the first window, the terminal device does not perform open-loop timing advance adjustment and/or open-loop frequency offset adjustment, thereby avoiding adverse impact of open-loop timing advance adjustment and/or open-loop frequency offset adjustment of the terminal device on channel estimation. This solution can resolve a problem in a conventional standard that the network device cannot configure an accurate first window when the network device cannot learn of open-loop timing advance adjustment and/or open-loop frequency offset adjustment of the terminal device, thereby improving accuracy of channel estimation.

In a possible implementation, the terminal device may be a network device in a wireless communication system, and may be any device having a wireless transceiver function.

In a possible implementation, the network device may be a network device in a wireless communication system, and may be any device having a wireless transceiver function.

In a possible implementation, the first duration may be subsequently updated in a process.

With reference to the second aspect, in some implementations of the second aspect, the terminal device determines the first duration based on a relative location between the terminal device and a satellite.

With reference to the second aspect, in some implementations of the second aspect, the terminal device receives third indication information, where the third indication information indicates the terminal device to report the duration in which the terminal device does not perform open-loop timing advance adjustment and/or open-loop frequency offset adjustment; and

That a terminal device sends first indication information includes:
The terminal device sends the first indication information based on the third indication information.

In another possible implementation, the first window configured on a network side may alternatively be a minimum window in which time/frequency offsets of all terminal devices in a cell do not change.

In this implementation, in a possible implementation, the first indication information reported by the terminal device may indicate deviation of the time/frequency offset of the terminal device relative to the first window. In this case, actual first duration is a size of the first window plus the deviation.

According to a third aspect, a communication method is provided. The method may be performed by a network device, or may be performed by a chip or a circuit configured in the network device. This is not limited in this application.

The method may include: A network device receives first indication information, where the first indication information indicates first duration, and the first duration includes duration in which a terminal device does not perform open-loop timing advance adjustment and/or open-loop frequency offset adjustment; the network device determines a first window based on the first duration, where the first window is used for channel estimation; and the network device sends second indication information to the terminal device, where the second indication information indicates the first window.

In a possible implementation, the terminal device may be a network device in a wireless communication system, and may be any device having a wireless transceiver function.

In a possible implementation, the network device may be a network device in a wireless communication system, and may be any device having a wireless transceiver function.

In a possible implementation, a period of blank duration is introduced at a boundary of the first duration, that is, when the terminal device needs to perform open-loop timing advance adjustment. A value of the blank duration may be configured by the network device, or may be agreed on in a conventional protocol. This is not particularly limited in this application.

The terminal device performs open-loop timing advance adjustment in the blank duration, so that data sending is not affected, and data is not discarded.

With reference to the third aspect, in some implementations of the third aspect, the network device sends third indication information to the terminal device, where the third indication information indicates the terminal device to report the duration in which the terminal device does not perform open-loop timing advance adjustment and/or open-loop frequency offset adjustment.

In a possible implementation, that the network device determines a first window based on the first duration includes: The network device determines the first window based on the first duration, second duration, and third duration, where the second duration includes duration in which the terminal device maintains phase continuity of a sending signal, and the third duration includes duration in which the terminal device maintains constancy of transmit power.

In a possible implementation, that the network device determines the first window based on the first duration, second duration, and third duration includes: Duration of the first window is a smallest one of the following values: the first duration, the second duration, and the third duration.

In a possible implementation, the first window includes at least one second window; the second window is used for channel estimation, and a size of the second window is less than or equal to the first duration; and a time period other than the second window in the first window further includes a time period used for open-loop timing advance adjustment and/or open-loop frequency offset adjustment.

In another possible implementation, the first window configured on a network side may alternatively be a minimum window in which time/frequency offsets of all terminal devices in a cell do not change.

In this implementation, in a possible implementation, the first indication information reported by the terminal device may indicate deviation of the time/frequency offset of the terminal device relative to the first window. In this case, actual first duration is a size of the first window plus the deviation.

According to a fourth aspect, a communication method is provided. The method may be performed by a network device, or may be performed by a chip or a circuit configured in the network device. This is not limited in this application.

The method may include: The network device determines a first window, where the first window is used for channel estimation; the network device receives first indication information, where the first indication information indicates first duration, and the first duration includes duration in which a terminal device does not perform open-loop timing advance adjustment and/or open-loop frequency offset adjustment; the network device divides the first window based on the first duration, to determine at least one second window, where the second window is used for channel estimation; a time period other than the second window in the first window further includes a time period used for open-loop timing advance adjustment and/or open-loop frequency offset adjustment; and the network device sends fourth indication information to the terminal device, where the fourth indication information indicates a configuration of the first window.

In a possible implementation, the terminal device may be a network device in a wireless communication system, and may be any device having a wireless transceiver function.

**In** a possible implementation, the network device may be a network device in a wireless communication system, and may be any device having a wireless transceiver function.

**In** a possible implementation, a period of blank duration is introduced at a boundary of the first duration, that is, when the terminal device needs to perform open-loop timing advance adjustment. A value of the blank duration may be configured by the network device, or may be agreed on in a conventional protocol. This is not particularly limited in this application.

The terminal device sends, in the blank duration, data before open-loop timing advance adjustment, and performs open-loop timing advance adjustment after the blank duration, so that data sending is not affected, and data is not discarded.

With reference to the fourth aspect, in some implementations of the fourth aspect, the network device sends third indication information to the terminal device, where the third indication information indicates the terminal device to report duration in which the terminal device does not perform open-loop timing advance adjustment and/or open-loop frequency offset adjustment.

In a possible implementation, that the network device divides the first window based on the first duration includes: the network device divides the first window based on the first duration, second duration, and third duration, where the second duration includes duration in which the terminal device maintains phase continuity of a sending signal, and the third duration includes duration in which the terminal device maintains constancy of transmit power.

In a possible implementation, that the network device divides the first window based on the first duration, second duration, and third duration includes: Duration of the first window is a smallest one of the following values: the first duration, the second duration, and the third duration.

In another possible implementation, the first window configured on a network side may alternatively be a minimum window in which time/frequency offsets of all terminal devices in a cell do not change.

In this implementation, in a possible implementation, the first indication information reported by the terminal device may indicate deviation of the time/frequency offset of the terminal device relative to the first window. In this case, actual first duration is a size of the first window plus the deviation.

According to a fifth aspect, a communication method is provided. The method may be performed by a terminal device, or may be performed by a chip or a circuit configured in the terminal device. This is not limited in this application.

The method may include: A terminal device receives second indication information, where the second indication information indicates a first window, and the first window is used for channel estimation.

In a possible implementation, the first window includes at least one second window, the second window is used for channel estimation, the second window is determined based on the first duration, and a time period other than the second window in the first window further includes a time period used for open-loop timing advance adjustment and/or open-loop frequency offset adjustment.

According to a sixth aspect, a communication method is provided. The method may be performed by a network device, or may be performed by a chip or a circuit configured in the network device. This is not limited in this application.

The method may include: The network device determines a first window, where the first window is used for channel estimation, and the first window is determined based on a beam in which a terminal device is located. The network device sends second indication information to the terminal device, where the second indication information indicates the first window.

According to a seventh aspect, a communication apparatus is provided, including: a sending unit, configured to send first indication information, where the first indication information indicates first duration, and the first duration includes duration in which the terminal device does not perform open-loop timing advance adjustment and/or open-loop frequency offset adjustment; and a receiving unit, configured to receive second indication information, where the second indication information indicates a first window, the first window is determined based on the first duration, and the first window is used for channel estimation.

In a possible implementation, the first window includes at least one second window, the second window is used for channel estimation, the second window is determined based on the first duration, and a time period other than the second window in the first window further includes a time period used for open-loop timing advance adjustment and/or open-loop frequency offset adjustment.

According to an eighth aspect, a communication apparatus is provided, including: a sending unit, configured to send first indication information, where the first indication information indicates first duration, and the first duration is duration in which the terminal device does not perform open-loop timing advance adjustment and/or open-loop frequency offset adjustment; a receiving unit, configured to receive fourth indication information, where the fourth indication information indicates a configuration of a first window, the first window is used for channel estimation, and the first window is divided into at least one second window based on the first duration; the second window is used for channel estimation; and a time period other than the second window in the first window further includes a time period used for open-loop timing advance adjustment and/or open-loop frequency offset adjustment.

In a possible implementation, the apparatus further includes a processing unit, configured to determine the first duration based on a relative location between the terminal device and a satellite.

In a possible implementation, the receiving unit is further configured to receive third indication information, where the third indication information indicates the terminal device to report the duration in which the terminal device does not perform open-loop timing advance adjustment and/or open-loop frequency offset adjustment.

In a possible implementation, that the sending unit is further configured to send first indication information includes: The sending unit is further configured to send the first indication information based on the third indication information.

According to a ninth aspect, a communication apparatus is provided, including: a receiving unit, configured to receive first indication information, where the first indication information indicates first duration, and the first duration includes duration in which a terminal device does not perform open-loop timing advance adjustment and/or open-loop frequency offset adjustment; a processing unit, configured to determine a first window based on the first duration, where the first window is used for channel estimation; and a sending unit, configured to send second indication information to the terminal device, where the second indication information indicates the first window.

In a possible implementation, the sending unit is further configured to send third indication information to the terminal device, where the third indication information indicates the terminal device to report duration in which the terminal device does not perform open-loop timing advance adjustment and/or open-loop frequency offset adjustment.

In a possible implementation, that the processing unit determines a first window based on the first duration includes: The processing unit determines the first window based on the first duration, second duration, and third duration, where the second duration includes duration in which the terminal device maintains phase continuity of a sending signal, and the third duration includes duration in which the terminal device maintains constancy of transmit power.

In a possible implementation, that the processing unit determines the first window based on the first duration, second duration, and third duration includes: Duration of the first window is a smallest one of the following values: the first duration, the second duration, and the third duration.

In a possible implementation, the first window includes at least one second window; the second window is used for channel estimation, and a size of the second window is less than or equal to the first duration; and a time period other than the second window in the first window further includes a time period used for open-loop timing advance adjustment and/or open-loop frequency offset adjustment.

According to a tenth aspect, a communication apparatus is provided, including: a processing unit, configured to determine a first window, where the first window is used for channel estimation; a receiving unit, configured to receive first indication information, where the first indication information indicates first duration, and the first duration includes duration in which a terminal device does not perform open-loop timing advance adjustment and/or open-loop frequency offset adjustment; the processing unit divides the first window based on the first duration, to determine at least one second window, where the second window is used for channel estimation; a time period other than the second window in the first window further includes a time period used for open-loop timing advance adjustment and/or open-loop frequency offset adjustment; and a sending unit, configured to send fourth indication information to the terminal device, where the fourth indication information indicates a configuration of the first window.

In a possible implementation, the sending unit is further configured to send third indication information to the terminal device, where the third indication information indicates the terminal device to report duration in which the terminal device does not perform open-loop timing advance adjustment and/or open-loop frequency offset adjustment.

In a possible implementation, that the processing unit divides the first window based on the first duration includes: The network device divides the first window based on the first duration, second duration, and third duration, where the second duration includes duration in which the terminal device maintains phase continuity of a sending signal, and the third duration includes duration in which the terminal device maintains constancy of transmit power.

In a possible implementation, that the processing unit divides the first window based on the first duration, second duration, and third duration includes: Duration of the first window is a smallest one of the following values: the first duration, the second duration, and the third duration.

According to an eleventh aspect, a communication apparatus is provided, including: a receiving unit, configured to receive second indication information, where the second indication information indicates a first window, and the first window is used for channel estimation.

In a possible implementation, the first window includes at least one second window, the second window is used for channel estimation, the second window is determined based on the first duration, and a time period other than the second window in the first window further includes a time period used for open-loop timing advance adjustment and/or open-loop frequency offset adjustment.

According to a twelfth aspect, a communication apparatus is provided, including: a processing unit, configured to determine a first window, where the first window is used for channel estimation, and the first window is determined based on a beam in which a terminal device is located; and a sending unit, configured to send second indication information to the terminal device, where the second indication information indicates the first window.

According to a thirteenth aspect, a wireless communication apparatus is provided, including modules or units configured to perform the method in any one of the first aspect or the possible implementations of the first aspect.

According to a fourteenth aspect, a wireless communication apparatus is provided, including modules or units configured to perform the method according to any one of the second aspect or the possible implementations of the second aspect.

According to a fifteenth aspect, a wireless communication apparatus is provided, including modules or units configured to perform the method according to any one of the third aspect or the possible implementations of the third aspect.

According to a sixteenth aspect, a wireless communication apparatus is provided, including modules or units configured to perform the method according to any one of the fourth aspect or the possible implementations of the fourth aspect.

According to a seventeenth aspect, a communication device is provided, including a processor. The processor is coupled to a memory, and may be configured to perform the method in the third aspect and the possible implementations of the third aspect or the method in the fourth aspect and the possible implementations of the fourth aspect. In a possible implementation, the communication device further includes the memory. In a possible implementation, the communication device further includes a communication interface, and the processor is coupled to the communication interface. In a possible implementation, the communication device further includes a communication interface, and the processor is coupled to the communication interface.

In an implementation, the communication device is a satellite. When the communication device is the satellite, the communication interface may be a transceiver or an input/output interface.

In another implementation, the communication device is a chip or a chip system. When the communication device is the chip or the chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to an eighteenth aspect, a communication device is provided, including a processor. The processor is coupled to a memory, and may be configured to execute instructions in the memory, to implement the method according to the first aspect and the possible implementations of the first aspect or the method according to the second aspect and the possible implementations of the second aspect. In a possible implementation, the communication device further includes the memory. In a possible implementation, the communication device further includes a communication interface, and the processor is coupled to the communication interface. In a possible implementation, a transceiver may be a transceiver circuit. In a possible implementation, an input/output interface may be an input/output circuit.

In an implementation, the communication device is a terminal device. When the communication device is the terminal device, the communication interface may be a transceiver or an input/output interface. In a possible implementation, the transceiver may be a transceiver circuit. In a possible implementation, the input/output interface may be an input/output circuit.

In another implementation, the communication device is a chip or a chip system. When the communication device is the chip or the chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to a nineteenth aspect, a communication apparatus is provided, including an input circuit, an output circuit, and a processing circuit. The processing circuit is configured to receive a signal through the input circuit, and transmit a signal through the output circuit, so that the method according to any one of the first aspect, the second aspect, the third aspect, or the fourth aspect, and the possible implementations of the foregoing aspects is implemented.

In a specific implementation process, the communication apparatus may be a chip, the input circuit may be an input pin, the output circuit may be an output pin, and the processing circuit may be a transistor, a gate circuit, a trigger, various logic circuits, or the like. An input signal received by the input circuit may be received and input by, for example without limitation to, a receiver, and a signal output by the output circuit may be output to and transmitted by, for example without limitation to, a transmitter. The input circuit and the output circuit may be different circuits or may be a same circuit, and in this case, the circuit is used as the input circuit and the output circuit respectively at different moments. Specific implementations of the processor and the various circuits are not limited in embodiments of this application.

According to a twentieth aspect, a processing apparatus is provided, including a processor and a memory. The processor is configured to: read instructions stored in the memory, receive a signal through a receiver, and transmit a signal through a transmitter, to perform the method according to any one of the first aspect, the second aspect, the third aspect, or the fourth aspect, and the possible implementations of the foregoing aspects.

In a possible implementation, there are one or more processors, and there are one or more memories.

In a possible implementation, the memory may be integrated with the processor, or the memory and the processor are disposed separately.

In a specific implementation process, the memory may be a non-transitory (non-transitory) memory, such as a read-only memory (read-only memory, ROM). The memory and the processor may be integrated into one chip, or may be separately disposed in different chips. A type of the memory and a manner in which the memory and the processor are disposed are not limited in this embodiment of this application.

It should be understood that, a related data exchange process such as sending of indication information may be a process of outputting the indication information from the processor, and receiving of capability information may be a process of receiving the input capability information by the processor. Specifically, data output by the processor may be output to a transmitter, and input data received by the processor may be from a receiver. The transmitter and the receiver may be collectively referred to as a transceiver.

The processor according to the sixteenth aspect may be a chip. The processor may be implemented by using hardware or software. When the processor is implemented by using the hardware, the processor may be a logic circuit, an integrated circuit, or the like; or when the processor is implemented by using the software, the processor may be a general purpose processor, and is implemented by reading software code stored in the memory. The memory may be integrated into the processor, or may exist independently outside the processor.

According to a twenty-first aspect, a processing apparatus is provided, including a communication interface and a processing circuit. The communication interface is configured to obtain to-be-processed data, and the processing circuit is configured to process the to-be-processed data according to the method in any one of the possible implementations of the first aspect or the second aspect.

According to a twenty-second aspect, a processing apparatus is provided, including a communication interface and a processing circuit. The communication interface is configured to send indication information according to the method in any possible implementation of the third aspect or the fourth aspect, and the processing circuit is configured to generate the indication information.

According to a twenty-third aspect, a computer program product is provided. The computer program product includes a computer program (which may also be referred to as code or instructions). When the computer program is run, a computer is enabled to perform the method according to any one of the first aspect, the second aspect, the third aspect, or the fourth aspect, and the possible implementations of the foregoing aspects.

According to a twenty-fourth aspect, a computer-readable medium is provided. The computer-readable medium stores a computer program (which may also be referred to as code or instructions). When the computer program is run on a computer, the computer is enabled to perform any one of the first aspect, the second aspect, the third aspect, or the fourth aspect, the method in any possible implementation of the foregoing aspects.

According to a twenty-fifth aspect, a communication system is provided, including the foregoing satellite and terminal device.

### BRIEF DESCRIPTION OF DRAWINGS

FIG. 1 is a diagram of an example of a communication system to which a communication method of this application is applicable;
FIG. 2 is a diagram of another example of a communication system to which a communication method of this application is applicable;
FIG. 3 is a schematic flowchart of an example of a communication method according to this application;
FIG. 4 is a schematic flowchart of another example of a communication method according to this application;
FIG. 5 is a diagram of a window division method according to an embodiment of this application;
FIG. 6 is a diagram of another window division method according to an embodiment of this application;
FIG. 7 is a diagram of still another window division method according to an embodiment of this application;
FIG. 8 is a diagram of yet another window division method according to an embodiment of this application;
FIG. 9 is a schematic flowchart of still another example of a communication method according to this application;
FIG. 10 is a schematic flowchart of yet another example of a communication method according to this application;
FIG. 11 is a block diagram of a communication apparatus according to an embodiment of this application;
FIG. 12 is a block diagram of another communication apparatus according to an embodiment of this application;
FIG. 13 is a block diagram of a terminal device according to an embodiment of this application; and
FIG. 14 is a block diagram of a network device according to an embodiment of this application.

### DESCRIPTION OF EMBODIMENTS

The following describes technical solutions of this application with reference to accompanying drawings.

To better understand embodiments of this application, the following first describes a communication system to which embodiments of this application are applicable and related concepts.

The technical solutions in embodiments of this application may be applied to various communication systems, for example, a global system for mobile communications (global system of mobile communication, GSM) system, a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a machineto-machine (machine to machine, M2M) communication system, a non-terrestrial network (non-terrestrial network, NTN) system, a 5th generation (the 5th Generation, 5G) mobile communication system, a new radio (new radio, NR) system, or a future wireless communication system. The non-terrestrial communication system may further include a high-altitude platform (high altitude platform station, HAPS) communication system.

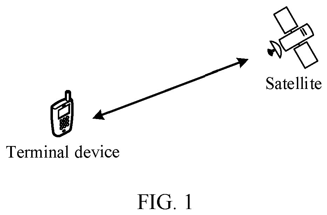

As shown in FIG. 1, the communication system may include at least one network device, for example, a network device shown in FIG. 1. The communication system may further include at least one terminal device, for example, a terminal device shown in FIG. 1. The network device may communicate with the terminal device through a radio link.

It should be understood that the network device in a wireless communication system may be any device that has a wireless transceiver function. The device includes but is not limited to a base station controller (Base Station Controller, BSC), a base transceiver station (Base Transceiver Station, BTS), or the like, may be one antenna panel or a group of antenna panels (including a plurality of antenna panels) of a base station in a 5G system or the like, or may be a satellite or the like.

It should be understood that the terminal device may also be referred to as an access terminal device, a subscriber unit, a subscriber station, a mobile station, a mobile console, a remote station, a remote terminal device, a mobile device, a user terminal device, a terminal device, a wireless communication device, a user agent, or a user apparatus. The terminal device in embodiments of this application may be a mobile phone (mobile phone), a smart watch (smart watch), a tablet computer (pad), a computer with wireless receiving and sending functions, a virtual reality (virtual reality, VR) terminal device, an augmented reality (augmented reality, AR) terminal device, a wireless terminal device in industrial control (industrial control), a wireless terminal device in self driving (self driving), a wireless terminal device in remote medical (remote medical), a wireless terminal device in a smart grid (smart grid), a wireless terminal device in transportation safety (transportation safety), a wireless terminal device in a smart city (smart city), a wireless terminal device in a smart home (smart home), or the like. An application scenario is not limited in embodiments of this application.

The following describes in detail the technical solutions in this application by using a satellite communication system as an example.

The terminal device in embodiments of this application may also be referred to as user equipment, an access terminal, a subscriber unit, a subscriber station, a mobile station, a remote station, a remote terminal, a mobile device, a user terminal, a terminal, a wireless communication device, a user agent, a user apparatus, or the like. The terminal device may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, a vehicle-mounted device, a wearable device, a terminal device in a 5G network, a terminal device in a future evolved public land mobile network (Public Land Mobile Network, PLMN), or the like. This is not limited in embodiments of this application.

A network device in embodiments of this application may be a device configured to communicate with the terminal device. The network device may be a base transceiver station (base transceiver station, BTS) in a global system for mobile communication (global system of mobile communication, GSM) or a code division multiple access (code division multiple access, CDMA) system, may be a NodeB (NodeB, NB) in a wideband code division multiple access (wideband code division multiple access, WCDMA) system, may be an evolved NodeB (evolutional NodeB, eNB or eNodeB) in an LTE system, or may be a wireless controller in a cloud radio access network (cloud radio access network, CRAN) scenario. Alternatively, the network device may be a relay station, an access point, a vehicle-mounted device, a wearable device, a network device in a 5G network, a network device in a future evolved PLMN network, or the like. This is not limited in embodiments of this application.

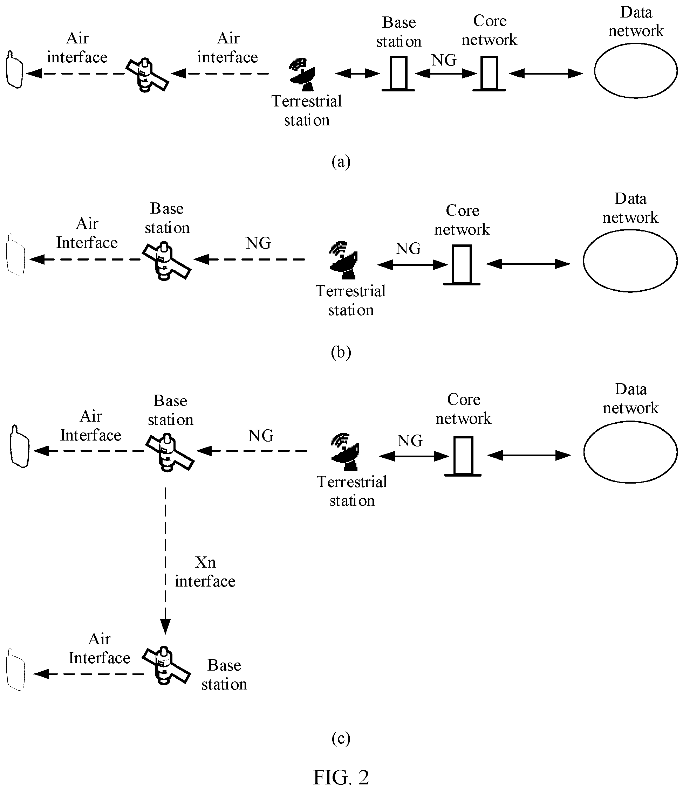

In addition, the solutions provided in this application are applied to the field of satellite communication, for example, members of 3GPP integrate satellite communication and 5G technologies. FIG. 2 shows a network application architecture of the technology. A terrestrial mobile terminal UE accesses a network through an air interface. The air interface may be various types of air interfaces, for example, a 5G air interface. As shown in (b) in FIG. 2, a base station may be deployed on a satellite. Alternatively, as shown in (a) in FIG. 2, the base station may be deployed on the ground and connected to a terrestrial station that communicates with the satellite. The satellite is connected to the terrestrial station over a radio link. The terrestrial station and a terrestrial base station are connected to a core network through a wired or radio link. The radio link may exist between satellites. As shown in (c) in FIG. 2, if the satellite has only a transparent transmission and forwarding function (that is, a corresponding base station is deployed on the ground), only the transparent transmission and forwarding function is implemented between the satellites. If the base station or some base station functions are deployed on the satellites, signaling exchange and user data transmission between base stations may be completed between the satellites. Network elements and interfaces of the network elements are described as follows.

Terminal device: The terminal device includes a mobile device that supports a new radio, for example, a mobile device such as a mobile phone and a pad. The terminal device may access a satellite network through the air interface and initiate services such as a call and internet access.

Base station: The base station mainly provides a wireless access service, schedules a radio resource for an access terminal, and provides a reliable wireless transmission protocol, a reliable data encryption protocol, and the like.

Core network: The core network provides services such as user access control, mobility management, session management, user security authentication, and charging. The core network includes a plurality of functional units, and can be divided into a control-plane functional entity and a data-plane functional entity. An access and mobility management unit (AMF) is responsible for user access management, security authentication, and mobility management. A user plane function (UPF) is responsible for managing functions such as user plane data transmission and traffic statistics collection.

A terrestrial station is responsible for forwarding signaling and service data between a satellite base station and the 5G core network.

Air interface: The air interface is a radio link between a terminal and a base station.

Xn interface: The Xn Interface is an interface between a 5G base station and another 5G station, used for signaling exchange, such as a handover.

NG interface: The NG interface is an interface between the 5G base station and the 5G core network, and is mainly used to exchange NAS signaling of a core network and service data of a user.

The following describes the technical solutions of this application in detail with reference to the accompanying drawings.

For ease of understanding embodiments of this application, related terms are first briefly described.

Beam: The beam may be understood as a space resource, may be a transmit or receive precoding vector having energy transmission directivity, and can identify the transmit or receive precoding vector by using index information. That the energy transmission is directional may indicate that a signal that is precoded by using the precoding vector and received at a space location has a relatively good receive power, for example, meets a receive demodulation signal-to-noise ratio. That the energy transmission is directional may also indicate that a same signal sent from different space locations and received by using the precoding vector differs in a receive power. A same device (for example, a network device or a terminal device) may have different precoding vectors, and different devices may also have different precoding vectors, that is, correspond to different beams. For a configuration or a capability of a device, one device may use one or more of a plurality of different precoding vectors at a same moment, in other words, one or more beams may be formed at the same time. The beam information may be identified by using index information. The index information may correspond to a configured resource identity (identity, ID) of the terminal device, for example, a corresponding configured CSI-RS ID or resource, or may correspond to a configured uplink sounding reference signal (sounding reference signal, SRS) ID or resource. Alternatively, the index information may be explicitly or implicitly carried by using a signal or a channel carried by using the beam, including but not limited to sending a synchronization signal or a broadcast channel or an uplink random access channel by using the beam to indicate the index information of the beam.

Cell: The cell is described by a higher layer from a perspective of resource management, mobility management, or a service unit. A coverage range of each access network device may be divided into one or more cells, and each cell may correspond to one frequency range. Each cell may work in a corresponding frequency range. The frequency range may be a frequency or a frequency band. This is not limited in this application. It should be noted that the cell may be an area within a coverage range of a wireless network of the access network device. In embodiments of this application, different cells may correspond to a same access network device or different access network devices. There may be one or more cells served by each access network device. Cells served by a same access network device may work in different frequency ranges, or may work in a same frequency range.

It should be understood radio resources supported by each cell are not limited to a frequency range, and may further include a time domain resource, a space domain resource, and the like. Details are not described herein.

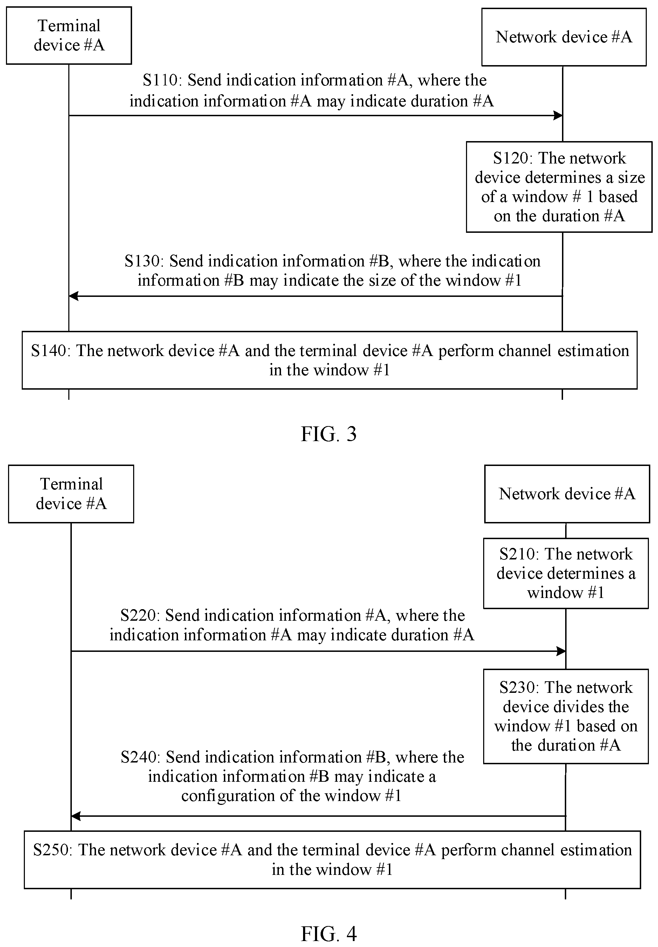

FIG. 3 is a schematic flowchart of a communication method 100 according to this application. The method 100 can effectively resolve a conventional-standard problem that a network device cannot configure an accurate TDW because the network device cannot learn of an open-loop timing advance adjustment window and/or an open-loop frequency offset adjustment window of a terminal. The communication method 100 includes the following steps:
S110: A terminal device #A (namely, an example of a terminal device) sends indication information #A (namely, an example of first indication information) to a network device #A (namely, an example of a network device).

The indication information #A may indicate duration #A (namely, an example of first duration).

First, a manner of sending the indication information #A is described.

By way of example, and not limitation, the terminal device #A may directly send the indication information #A to the network device #A.

Alternatively, the terminal device #A may send the indication information #A to a network device #B, and the network device #B sends the indication information #A to the network device #A.

Alternatively, the terminal device #A may send the indication information #A to another network device, for example, a terrestrial base station, and the terrestrial base station sends the indication information #A to the network device #A.

Alternatively, the terminal device #A may send the indication information #A to another terminal device, for example, a terminal device #B, and the terminal device #B sends the indication information #A to the network device #A (for example, by using a technology such as D2D communication).

In this case, for example, the indication information #A may be carried in a broadcast message or a multicast message. In addition, the indication information #A may include a dedicated identifier of the terminal device #A, for example, a device identifier of the terminal device #A, or an identifier of the terminal device #A in a cell provided by the network device #A. Therefore, the network device may determine, based on the dedicated identifier of the terminal device #A, that the indication information #A is from the terminal device #A.

For another example, the indication information #A may be carried in a unicast message of the terminal device #A.

The following describes content indicated by the indication information #A.

By way of example, and not limitation, in this application, the duration #A includes duration in which the terminal device does not perform open-loop timing advance adjustment and/or open-loop frequency offset adjustment.

In this embodiment of this application, a value of the duration #A may be determined based on an actual situation. The value of the duration #A is less than or equal to maximum duration in which the terminal device #A may not perform open-loop timing advance window adjustment and/or open-loop frequency offset adjustment based on a current location of the terminal device #A and a relative location between the terminal device #A and the network device #A.

Within the duration #A, the terminal device does not perform open-loop timing advance adjustment and/or open-loop frequency offset adjustment. In other words, the terminal device cannot perform open-loop timing advance adjustment and/or open-loop frequency offset adjustment within the duration #A. Alternatively, it may be understood that after the duration #A expires (or after the duration #A ends), the terminal device #A may perform open-loop timing advance adjustment and/or open-loop frequency offset adjustment.

It should be understood that, when the duration #A expires, the terminal device may perform open-loop timing advance adjustment and/or open-loop frequency offset adjustment. This does not mean that the terminal device definitely performs open-loop timing advance adjustment and/or open-loop frequency offset adjustment when the duration #A expires. When the duration #A expires, whether the terminal device performs open-loop timing advance adjustment and/or open-loop frequency offset adjustment may alternatively be determined based on another factor. This is not limited in this embodiment of this application.

It should be further understood that the value of the duration #A may be randomly determined based on an actual situation. For example, the terminal device #A may flexibly adjust the value of the duration #A based on a channel estimation requirement of the terminal device #A. This is not limited in this embodiment of this application.

In a possible implementation, the duration #A may be measured in slots, symbols, milliseconds, a seconds, subframes, or the like. This is not particularly limited in this application.

The following describes an indication manner of the indication information #A.

In this application, the indication information #A may explicitly indicate duration #1 (namely, Manner 1), or the indication information #A may implicitly indicate the duration #1 (namely, Manner 2). The following separately describes the foregoing two manners in detail.

### Manner 1

Specifically, the indication information #A may include an index or an identifier corresponding to the duration #1, or the indication information #A may include a bit corresponding to a value of the duration #1.

By way of example, and not limitation, in this application, the indication information #A may be carried in any common type of message of UE, for example, RRC signaling, a MAC CE, or UCI.

In this application, the indication information #A may be sent together with indication information #B (namely, an example of second indication information), indication information #C (namely, an example of third indication information), or indication information #D (namely, an example of fourth indication information). In other words, the indication information #A, the indication information #B, the indication information #C, and/or the indication information #D may be carried in a same message.

### Manner 2

Specifically, mapping relationship information (denoted as a mapping relationship #A) may be prestored in the network device #A, and the mapping relationship #A may include a mapping relationship between a plurality of parameter groups and a plurality of pieces of durations.

The mapping relationship #A may be specified by a communication system or a communication protocol based on a network type, the mapping relationship #A may be determined by the network device #A and the terminal device #A through negotiation, or the mapping relationship #A may be indicated by the network device #A to the terminal device #A. This is not particularly limited in this application.

In some cases, it is assumed that the terminal device needs to perform open-loop timing advance adjustment. When the terminal device needs to perform open-loop timing advance adjustment, and it is assumed that a timing advance of data that needs to be adjusted is greater than that of the data before adjustment, two segments of data may overlap. A method for resolving the problem in the prior art is to directly discard a head of a latter segment of data or discard a tail of a former segment of data.

In a possible implementation, at a boundary of the duration #A, that is, when the terminal device needs to perform open-loop timing advance adjustment, a period of blank duration is introduced. The terminal device completes sending of the data before adjustment in the blank duration, and then performs open-loop timing advance adjustment.

In a possible implementation, a value of the blank duration may be configured by the network device, or may be agreed on in a conventional protocol. This is not particularly limited in this application.

The terminal device sends, in the blank duration, the data before open-loop timing advance adjustment. This does not affect data sending, and data is not discarded.

S120: The network device #A determines a window #1 (namely, an example of a first window) based on the duration #A.

The window #1 is used for channel estimation.

In a possible implementation, the window #1 may be an N-TDW.

It should be noted that the value of the duration #A may be determined based on the current location of the terminal device #A and the relative location between the terminal device #A and the network device #A. However, the relative location may also have a specific error. Consequently, the actual duration #A may be smaller. Therefore, in this embodiment of this application, the network device such as the base station or the satellite may further configure new duration #A based on the error.

In a possible implementation, when the relative location determined by the terminal device #A has the error compared to an actual relative location, the network device may adjust the duration #A based on the error, to determine the new duration #A.

A value of the new duration #A is less than or equal to the value of the duration #A corresponding to the indication information #A reported by UE. The terminal device ensures, based on the value of the new duration #A configured by the network device, phase continuity of sending an uplink signal and power consistency of sending the uplink signal.

By way of example, and not limitation, in this embodiment of this application, the network device #A may determine a size of the window #1 based on the duration #A, duration #B, and duration #C.

For example, duration of the window #1 is min{the duration #A, the duration #B (namely, an example of second duration), and the duration #C (namely, an example of third duration)}.

The duration #B includes duration in which the terminal device #A maintains phase continuity of a sending signal, and the duration #C includes duration in which the terminal device #A maintains constancy of transmit power.

It should be understood that the duration of the window #1 may alternatively be determined based on an actual situation. For example, the duration of the window #1 may alternatively be less than min{the duration #A, the duration #B, and the duration #C}. Alternatively, a positive or negative error amount may be added to the duration of the window #1 due to factors such as a device error. A manner of determining the duration of the window #1 is not particularly limited in this application.

In a possible implementation, the window #1 includes at least one window #2 and/or at least one window #3.

The window #2 is used for channel estimation, and the window #3 is used for open-loop timing advance adjustment and/or open-loop frequency offset adjustment.

S130: The network device #A sends the indication information #B (namely, an example of the second indication information) to the terminal device #A.

The indication information #B indicates the window #1.

By way of example, and not limitation, the network device #A may directly send the indication information #B to the terminal device #A.

Alternatively, the network device #A may send the indication information #B to a network device #B, and the network device #B sends the indication information #B to the terminal device #A.

Alternatively, the network device #A may send the indication information #B to another network device, for example, a terrestrial base station, and the terrestrial base station sends the indication information #B to the terminal device #A.

Alternatively, the network device #A may send the indication information #B to another terminal device, for example, a terminal device #B, and the terminal device #B sends the indication information #B to the network device #A (for example, by using a technology such as D2D communication).

The following describes an indication manner of the indication information #B.

In this application, the indication information #B may explicitly indicate the duration #1 (namely, Manner 1), or the indication information #A may implicitly indicate validity duration #1 (namely, Manner 2). The following separately describes the foregoing two manners in detail.

### Manner 1

Specifically, the indication information #B may include an index or an identifier corresponding to the window #1, or the indication information #B may include a bit corresponding to a value of the window #1.

By way of example, and not limitation, in this application, the indication information #B may be carried in a system information block (system information block, SIB), for example, SIB1.

In a possible implementation, the indication information #B may alternatively be carried in any common type of message of UE, for example, RRC signaling, a MAC CE, or UCI.

In this application, the indication information #B may be sent together with the indication information #C or the indication information #D. In other words, the indication information #A and the indication information #C and/or the indication information #D may be carried in a same message, for example, SIB1.

### Manner 2

Specifically, mapping relationship information (denoted as a mapping relationship #B, namely, an example of a mapping relationship in the first aspect) may be prestored in the terminal device #A. The mapping relationship #B may include a mapping relationship between a plurality of parameter groups and a plurality of time periods.

The mapping relationship #B may be specified by a communication system or a communication protocol based on a network type, the mapping relationship #B may be determined by the network device #A and the terminal device #A through negotiation, or the mapping relationship #B may be indicated by the network device #A to the terminal device #A. This is not particularly limited in this application.

S140: The terminal device #A and the network device #A perform channel estimation in the window #1.

In another possible implementation, the window #1 configured on a network side may alternatively be a minimum window in which time/frequency offsets of all terminal devices in a cell do not change.

In this implementation, in a possible implementation, the indication information #A reported by the terminal device #A may indicate deviation of time/frequency offset of the terminal device relative to the window #1. In this case, actual duration #1 is a size of the window #1 plus the deviation.

FIG. 4 is a schematic flowchart of a communication method 200 according to this application. In the method 200, open-loop timing advance adjustment and/or open-loop frequency offset adjustment are/is used as a determining condition for starting an A-TDW. When open-loop TA adjustment is performed in combination with another event, a quantity of A-TDWs may be reduced. The communication method 200 includes the following steps:
S210: A network device #A determines a window #1.

The window #1 is used for channel estimation, and a size of the window #1 may be randomly determined based on an actual situation. This is not limited in this embodiment of this application.

S220: A terminal device #A sends indication information #A to the network device #A.

The indication information #A may indicate duration #A.

The following describes content indicated by the indication information #A.

By way of example, and not limitation, in this application, the duration #A may be duration in which the terminal device does not perform open-loop timing advance adjustment and/or open-loop frequency offset adjustment.

In this application, a value of the duration #A may be determined based on an actual situation. The value of the duration #A is less than or equal to maximum duration in which the terminal device #A may not perform open-loop timing advance window adjustment and/or open-loop frequency offset adjustment based on a current location and a relative location between the terminal device #A and the network device #A.

It should be noted that the value of the duration #A may be randomly determined based on an actual situation. For example, the terminal device #A may flexibly adjust the value of the duration #A based on a channel estimation requirement of the terminal device #A. This is not limited in this embodiment of this application.

In a possible implementation, the duration #A may be measured in slots, symbols, milliseconds, seconds, subframes, or the like. This is not particularly limited in this application.

A sending manner and an indication manner of the indication information #A are similar to those in the foregoing embodiment. To avoid repetition, detailed descriptions thereof are omitted herein.

In some cases, it is assumed that the terminal device needs to perform open-loop timing advance adjustment. When the terminal device needs to perform open-loop timing advance adjustment, and it is assumed that a timing advance of data that needs to be adjusted is greater than data before adjustment, two segments of data may overlap. A method for resolving the problem in the prior art is to directly discard a head of a latter segment of data or discard a tail of a former segment of data.

In a possible implementation, at a boundary of the duration #A, that is, when the terminal device needs to perform open-loop timing advance adjustment, a period of blank duration is introduced. The terminal device completes sending of the data before adjustment in the blank duration, and then performs open-loop timing advance adjustment.

In a possible implementation, a value of the blank duration may be configured by the network device, or may be agreed on in a conventional protocol. This is not particularly limited in this application.

The terminal device sends, in the blank duration, the data before open-loop timing advance adjustment. This does not affect data sending, and data is not discarded.

S230: The network device #A divides the window #1 based on the duration #A.

It should be noted that the value of the duration #A may be determined based on the current location of the terminal device #A and the relative location between the terminal device #A and the network device #A. However, the relative location may also have a specific error. Consequently, the actual duration #A may be smaller.

Therefore, in this embodiment of this application, the network device such as the base station may further configure new duration #A based on the error.

A value of the new duration #A is less than or equal to the value of the duration #A corresponding to the indication information #A reported by the terminal device. The terminal device ensures, based on the value of the new duration #A configured by the network device, phase continuity of sending an uplink signal and power consistency of sending the uplink signal.

In this embodiment of this application, the window #1 is divided into at least one window #2 (namely, an example of a second window) and/or at least one window #3.

The window #2 is used for channel estimation, and the window #2 is determined based on the duration #A. The window #3 is used for open-loop timing advance adjustment and/or open-loop frequency offset adjustment.

In a possible implementation, the window #2 may be an A-TDW, and the window #3 may be a window required by the terminal device to perform open-loop timing advance adjustment and/or open-loop frequency offset adjustment.

In a possible implementation, the window #3 may following the ending of the duration #A.

In a possible implementation, the window #1 may be divided based on both the duration #A and another event.

The another event may be any event that can damage phase continuity or power stability, such as uplink and downlink switching or unstable signal sending. A specific event type is not limited in this application.

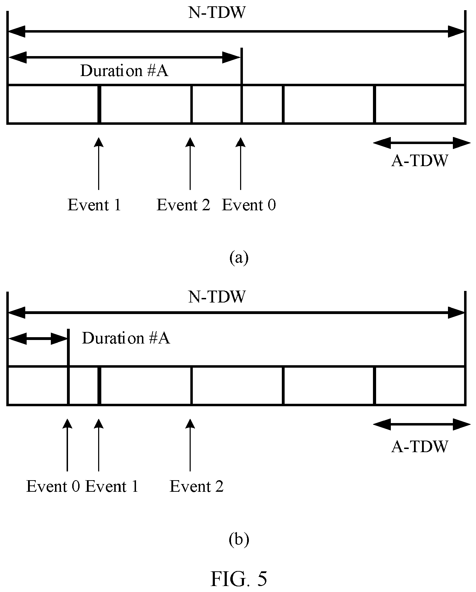

By way of example, and not limitation, FIG. 5 of this application provides a diagram of a method for dividing the window #1.

As shown in FIG. 5, in an N-TDW, a boundary of the duration #A is used as a newly introduced event 0, and an event 1 and an event 2 separately trigger start of a new A-TDW. When the duration #A ends, a current A-TDW ends, and a terminal device performs open-loop timing advance adjustment and/or open-loop frequency offset adjustment, and starts the new A-TDW.

It should be noted that, if no other event causes the A-TDW to be generated before the duration #A ends, the A-TDW needs to be restarted when the duration #A ends, as shown in a case in FIG. 5.

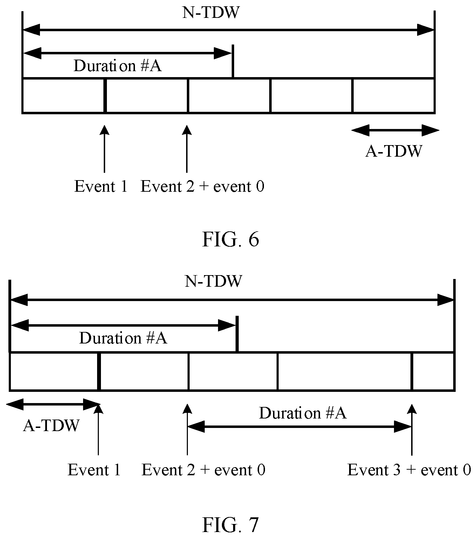

However, if another event occurs before the duration #A ends, the terminal device may simultaneously perform open-loop timing advance adjustment and/or open-loop frequency offset adjustment when the another event occurs. As shown in FIG. 6, when the event 2 occurs, the terminal device simultaneously performs open-loop timing advance adjustment and/or open-loop frequency offset adjustment. When the subsequent duration #A ends, the terminal may no longer perform open-loop timing advance adjustment and/or open-loop frequency offset adjustment.

It should be understood that, provided that the another event triggers the A-TDW before the duration #A ends, a new A-TDW may not be triggered when the subsequent duration #A ends.

By way of example, and not limitation, FIG. 7 of this application provides a diagram of another method for dividing the window #1.

As shown in FIG. 7, after the terminal device performs open-loop timing advance adjustment and/or open-loop frequency offset adjustment, if no other event triggers the A-TDW within the subsequent duration #A, the terminal device still needs to restart the A-TDW based on an end of the duration #A.

In the embodiments shown in FIG. 5 to FIG. 7, start time and end time of the N-TDW configured by the network device #A do not change. If open-loop timing advance adjustment and/or open-loop frequency offset adjustment are/is performed in the N-TDW, that is, a boundary of the duration #A, there will be a new A-TDW.

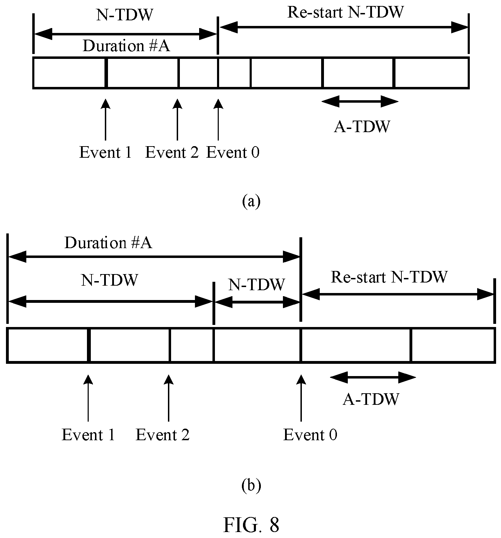

It should be understood that, in this embodiment of this application, the start time and the end time of the N-TDW configured by the network device #A may also change. The following uses FIG. 8 as an example for description.

As shown in FIG. 8, a start point of the N-TDW may be adjusted based on the duration #A, and the N-TDW is restarted when the duration #A ends. This rule is applicable to a case in which the duration #A is less than or equal to the N-TDW, as shown in (a) in FIG. 8, and is also applicable to a case in which the duration #A is greater than the N-TDW, as shown in (b) in FIG. 8.

It should be understood that start time and end time of the window #1 are not limited in this application.

S240: The network device #A sends indication information #D (namely, an example of fourth indication information) to the terminal device #A.

The indication information #D indicates a configuration of the window #1.

The configuration of the window #1 may include a division state of the window #2 or the window #3.

By way of example, and not limitation, the network device #A may directly send the indication information #D to the terminal device #A.

Alternatively, the network device #A may send the indication information #D to a network device #B, and the network device #B sends the indication information #D to the terminal device #A.

Alternatively, the network device #A may send the indication information #D to another network device, for example, a terrestrial base station, and the terrestrial base station sends the indication information #B to the terminal device #A.

Alternatively, the network device #A may send the indication information #D to another terminal device, for example, the terminal device #B, and the terminal device #B sends the indication information #D to the network device #A (for example, by using a technology such as D2D communication).

The following describes an indication manner of the indication information #D.

In this application, the indication information # D may explicitly indicate the duration #1 (namely, Manner 1), or the indication information #A may implicitly indicate the validity duration #1 (namely, Manner 2). The following separately describes the foregoing two manners in detail.

### Manner 1

Specifically, the indication information #D may include an index or an identifier corresponding to the configuration of the window #1, or the indication information #A may include a bit corresponding to a value of the configuration of the window #1.

By way of example, and not limitation, in this application, the indication information #D may be carried in a system information block (system information block, SIB), for example, SIB1.

In a possible implementation, the indication information #D may alternatively be carried in any common type of message of UE, for example, RRC signaling, a MAC CE, or UCI.

In this application, the indication information #D may be sent together with the indication information #C or the indication information #B. In other words, the indication information #D and the indication information #C and/or the indication information #B may be carried in a same message, for example, SIB1.

### Manner 2

Specifically, mapping relationship information (denoted as a mapping relationship #C, namely, an example of the mapping relationship in the first aspect) may be prestored in the terminal device #A. The mapping relationship #C may include a mapping relationship between a plurality of parameter groups and a plurality of time periods.

The mapping relationship #C may be specified by a communication system or a communication protocol based on a network type, the mapping relationship #C may be determined by the network device #A and the terminal device #A through negotiation, or the mapping relationship #C may be indicated by the network device #A to the terminal device #A. This is not particularly limited in this application.

S250: The terminal device #A and the network device #A perform channel estimation in the window #1.

It should be noted that the method 100 and the method 200 may be used separately or in combination. This is not particularly limited in this application. For example, based on the duration #A, both the N-TDW and the A-TDW may be limited, or the N-TDW or the A-TDW may be separately limited.

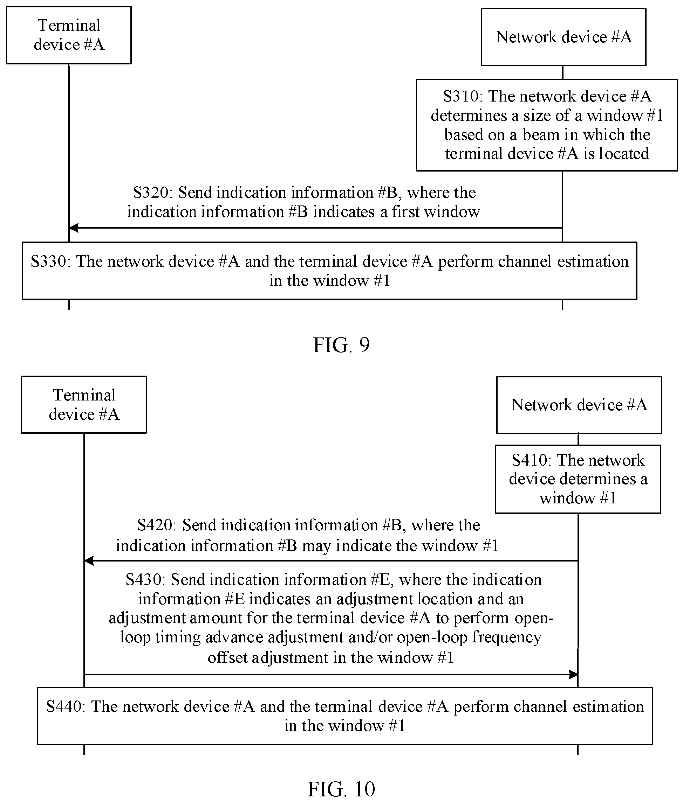

FIG. 9 is a schematic flowchart of a communication method 300 according to this application. In the method 300, a network device configures minimum duration #A at a beam level, so that reporting overheads of a terminal device can be reduced. The communication method 300 includes the following steps:
S310: A network device #A determines a window #1 based on a beam in which a terminal device #A is located.

The window #1 is used for channel estimation.

In this embodiment of this application, a size of the window #1 may be determined based on an elevation range of a coverage range of a current beam or cell.

In a possible implementation, the window #1 is a minimum window in which all terminal devices in the beam or the cell do not perform open-loop timing advance adjustment and/or open-loop frequency offset adjustment.

In a possible implementation, the window #1 may alternatively be less than a minimum window in which all terminal devices in the beam or the cell do not perform open-loop timing advance adjustment and/or open-loop frequency offset adjustment.

It should be understood that the cell may include a plurality of beams.

In a possible implementation, the window #1 includes at least one window #2 and/or at least one window #3.

The window #2 is used for channel estimation, and the window #3 is used for open-loop timing advance adjustment and/or open-loop frequency offset adjustment.

S320: The network device sends indication information #B to the terminal device, where the indication information #B indicates the first window.

The indication information #B indicates the window #1.

A sending manner and an indication manner of the indication information #B are similar to those in the foregoing embodiment. To avoid repetition, detailed descriptions thereof are omitted herein.

S330: The terminal device #A and the network device #A perform channel estimation in the window #1.

In the foregoing embodiment, the terminal device does not perform open-loop timing advance adjustment and/or open-loop frequency offset adjustment in a window that is determined by the network device and that is used for channel estimation, to avoid impact of open-loop timing advance adjustment and/or open-loop frequency offset adjustment on channel estimation.

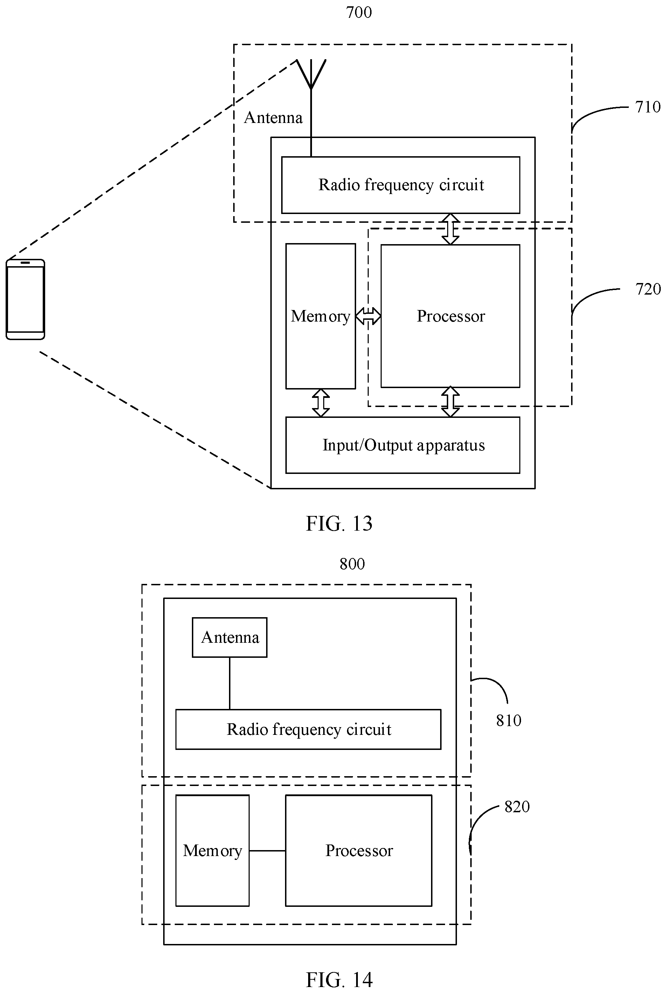

In another possible implementation, the terminal device may alternatively perform open-loop timing advance adjustment and/or open-loop frequency offset adjustment in a window that is determined by the network device and that is used for channel estimation. The following provides a specific embodiment as an example, as shown in FIG. 14.

FIG. 10 is a schematic flowchart of a communication method 400 according to this application. A terminal device reports, to a network device, time and an adjustment amount for the terminal device to perform open-loop timing advance adjustment and/or open-loop frequency offset adjustment in a window that is determined by the network device and that is used for channel estimation, to avoid impact of open-loop timing advance adjustment and/or open-loop frequency offset adjustment performed by the terminal device on channel estimation. The communication method 400 includes the following steps:
S410: A network device #A determines a window #1.

The window #1 is used for channel estimation, and a size of the window #1 may be randomly determined based on an actual situation. This is not limited in this embodiment of this application.

S420: The network device #A sends indication information #B to a terminal device #A.

The indication information #B indicates the window #1.

A sending manner and an indication manner of the indication information #B are similar to those in the foregoing embodiment. To avoid repetition, detailed descriptions thereof are omitted herein.

S430: The terminal device #A sends indication information #E to the network device #A.

The indication information #E indicates an adjustment location and an adjustment amount for the terminal device to perform open-loop timing advance adjustment and/or open-loop frequency offset adjustment in the window #1.

In a possible implementation, the adjustment location is a time point of open-loop timing advance adjustment and/or open-loop frequency offset adjustment, and the adjustment location may be a location relative to a start point of the window #1.

In a possible implementation, the adjustment amount may be an adjustment amount of the terminal device relative to start time of the window #1.

A sending manner and an indication manner of the indication information #E are similar to those of the indication information #A. To avoid repetition, detailed descriptions thereof are omitted herein.

S440: The terminal device #A and the network device #A perform channel estimation in the window #1.

It should be noted that, after obtaining the indication information #E, the network device #A may adjust the channel estimation method based on the time and the adjustment amount for the terminal device #A to perform open-loop timing advance adjustment and/or open-loop frequency offset adjustment in the window #1. In this way, impact of open-loop timing advance adjustment and/or open-loop frequency offset adjustment on channel estimation is eliminated.

In a possible implementation, when the network device #A performs channel estimation, the network device #A may re-sample and adjust a received signal based on a timing advance adjustment amount of the terminal device, to compensate for impact of timing advance adjustment on phase continuity.

It should be understood that the network device #A does not need to re-divide the window #1 based on the indication information #E.

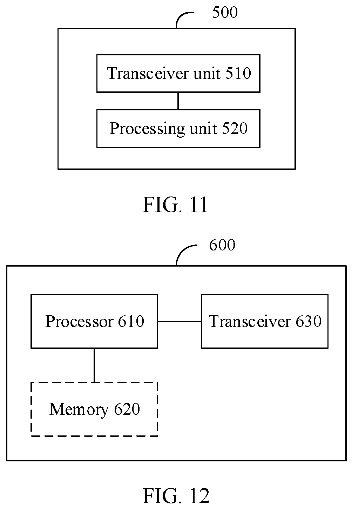

FIG. 11 is a block diagram of a communication apparatus 500 according to an embodiment of this application. The apparatus 500 includes a transceiver unit 510 and a processing unit 520. The transceiver unit 510 may communicate with the outside, and the processing unit 520 is configured to perform data processing. The transceiver unit 510 may also be referred to as a communication interface or a communication unit.

In a possible implementation, the apparatus 500 may further include a storage unit. The storage unit may be configured to store instructions and/or data. The processing unit 520 may read the instructions and/or the data in the storage unit.

The apparatus 500 may be configured to perform an action performed by the satellite in the foregoing method embodiments. In this case, the apparatus 500 may be the satellite or a component that can be configured in the satellite. The transceiver unit 510 is configured to perform an operation related to receiving and sending on a satellite side in the foregoing method embodiments. The processing unit 520 is configured to perform an operation related to processing on the satellite side in the foregoing method embodiments.

Alternatively, the apparatus 500 may be configured to perform an action performed by the terminal device in the foregoing method embodiments. In this case, the apparatus 500 may be the terminal device or a component that can be configured in the terminal device. The transceiver unit 510 is configured to perform an operation related to receiving and sending on a terminal device side in the foregoing method embodiments. The processing unit 520 is configured to perform an operation related to processing on the terminal device side in the foregoing method embodiments.

As shown in FIG. 12, an embodiment of this application further provides a communication apparatus 600. The communication apparatus 600 includes a processor 610. The processor 610 is coupled to a memory 620. The memory 620 is configured to store a computer program or instructions and/or data. The processor 610 is configured to execute the computer program or the instructions and/or the data stored in the memory 620, so that the method in the foregoing method embodiment is performed.

In a possible implementation, there are one or more processors 610 included in the communication apparatus 600.

In a possible implementation, as shown in FIG. 12, the communication apparatus 600 may further include a memory 7620.

In a possible implementation, the communication apparatus 600 may include one or more memories 620.

In a possible implementation, the memory 620 and the processor 610 may be integrated together, or disposed separately.

In a possible implementation, as shown in FIG. 12, the wireless communication apparatus 600 may further include a transceiver 7630, and the transceiver 630 is configured to receive and/or send a signal. For example, the processor 610 is configured to control the transceiver 630 to receive and/or send a signal.

In a solution, the communication apparatus 600 is configured to implement an operation performed by the satellite in the foregoing method embodiments.

For example, the processor 610 is configured to implement an operation related to processing performed by the satellite in the foregoing method embodiments, and the transceiver 630 is configured to implement an operation related to receiving and sending performed by the satellite in the foregoing method embodiments.

In another solution, the communication apparatus 600 is configured to implement an operation performed by the terminal device in the foregoing method embodiment.

For example, the processor 610 is configured to implement an operation related to processing performed by the terminal device in the foregoing method embodiments, and the transceiver 630 is configured to implement an operation related to receiving and sending performed by the terminal device in the foregoing method embodiments.

An embodiment of this application further provides a communication apparatus 700. The communication apparatus 700 may be a terminal device or a chip. The communication apparatus 700 may be configured to perform an operation performed by the terminal device in the foregoing method embodiments. When the communication apparatus 700 is the terminal device, FIG. 13 is a simplified diagram of a structure of the terminal device. For ease of understanding and illustration, FIG. 13 uses an example in which the terminal device is a mobile phone. As shown in FIG. 13, the terminal device includes a processor, a memory, a radio frequency circuit, an antenna, and an input/output apparatus. The processor is mainly configured to: process a communication protocol and communication data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user. It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 13 shows only one memory and one processor. **In** an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have a transceiver function may be considered as a transceiver unit of the terminal device, and the processor that has a processing function may be considered as a processing unit of the terminal device.

As shown in FIG. 13, the terminal device includes a transceiver unit 710 and a processing unit 720. The transceiver unit 710 may also be referred to as a transceiver, a transceiver machine, a transceiver apparatus, or the like. The processing unit 720 may also be referred to as a processor, a processing board, a processing module, a processing apparatus, or the like.

In a possible implementation, a component configured to implement a receiving function in the transceiver unit 710 may be considered as a receiving unit, and a component configured to implement a sending function in the transceiver unit 710 may be considered as a sending unit. In other words, the transceiver unit 710 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

For example, in an implementation, the transceiver unit 710 is configured to perform a receiving operation of the terminal device. The processing unit 720 is configured to perform a processing action on a terminal device side.

It should be understood that FIG. 13 is merely an example rather than a limitation. The terminal device including the transceiver unit and the processing unit may not depend on the structure shown in FIG. 13.

When the communication apparatus 700 is a chip, the chip includes a transceiver unit and a processing unit. The transceiver unit may be an input/output circuit or a communication interface. The processing unit may be a processor, a microprocessor, or an integrated circuit integrated on the chip. The input circuit may be an input pin, the output circuit may be an output pin, and a processing circuit may be a transistor, a gate circuit, a trigger, various logic circuits, and the like. An input signal received by the input circuit may be received and input by, for example without limitation to, a receiver, and a signal output by the output circuit may be output to and transmitted by, for example without limitation to, a transmitter. The input circuit and the output circuit may be different circuits or may be a same circuit, and in this case, the circuit is used as the input circuit and the output circuit respectively at different moments.

An embodiment of this application further provides a communication apparatus 800. The communication apparatus 800 may be a satellite or a chip. The communication apparatus 800 may be configured to perform an operation performed by the satellite in the foregoing method embodiments.

The communication apparatus 800 is a satellite, for example, a satellite base station. FIG. 14 is a simplified diagram of a structure of a base station. The base station includes a part 810 and a part 820. The part 810 is mainly configured to: send and receive a radio frequency signal, and perform conversion between the radio frequency signal and a baseband signal. The part 820 is mainly configured to: perform baseband processing, control the base station, and the like. The part 810 may be usually referred to as a transceiver unit, a transceiver machine, a transceiver circuit, a transceiver, or the like. The part 820 is usually a control center of the base station, and may be usually referred to as a processing unit, and is configured to control the base station to perform a processing operation on the network device side in the foregoing method embodiments.

The transceiver unit in the part 810 may also be referred to as a transceiver machine, a transceiver, or the like, and includes an antenna and a radio frequency circuit. The radio frequency circuit is mainly configured to perform radio frequency processing. In a possible implementation, a component configured to implement a receiving function in the part 810 may be considered as a receiving unit, and a component configured to implement a sending function may be considered as a sending unit. In other words, the part 810 includes the receiving unit and the sending unit. The receiving unit may also be referred to as a receiver machine, a receiver, a receive circuit, or the like. The sending unit may be referred to as a transmitter machine, a transmitter, a transmit circuit, or the like.

The part 820 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, a plurality of boards may share one or more processors, or a plurality of boards share one or more memories, or a plurality of boards share one or more processors at the same time.

For example, in an implementation, the transceiver unit in the part 810 is configured to perform steps related to receiving and sending performed by the satellite in the embodiments. The part 820 is configured to perform steps related to processing performed by the satellite.

It should be understood that FIG. 14 is merely an example rather than a limitation. The network device including the transceiver unit and the processing unit may not depend on the structure shown in FIG. 14.

When the communication apparatus 800 is a chip, the chip includes a transceiver unit and a processing unit. The transceiver unit may be an input/output circuit or a communication interface. The processing unit is a processor, a microprocessor, or an integrated circuit integrated on the chip. The input circuit may be an input pin, the output circuit may be an output pin, and a processing circuit may be a transistor, a gate circuit, a trigger, various logic circuits, and the like. An input signal received by the input circuit may be received and input by, for example without limitation to, a receiver, and a signal output by the output circuit may be output to and transmitted by, for example without limitation to, a transmitter. The input circuit and the output circuit may be different circuits or may be a same circuit, and in this case, the circuit is used as the input circuit and the output circuit respectively at different moments.

An embodiment of this application further provides a computer-readable storage medium. The computer-readable storage medium stores computer instructions used to implement the method performed by the terminal device or the method performed by the satellite in the method embodiments.

For example, when the computer program is executed by a computer, the computer is enabled to implement the method performed by the terminal device or the method performed by the satellite in the method embodiments.

An embodiment of this application further provides a computer program product including instructions. When the instructions are executed by a computer, the computer is enabled to implement the method performed by the terminal device or the method performed by the network device in the foregoing method embodiments.

An embodiment of this application further provides a communication system. The communication system includes the satellite and the terminal device in the foregoing embodiments.

For explanations and beneficial effects of related content of any wireless communication apparatus provided above, refer to the corresponding method embodiment provided above. Details are not described herein again.

In embodiments of this application, the terminal device or the network device may include a hardware layer, an operating system layer running on the hardware layer, and an application layer running on the operating system layer. The hardware layer may include hardware such as a central processing unit (central processing unit, CPU), a memory management unit (memory management unit, MMU), and memory (also referred to as main memory). An operating system at the operating system layer may be any one or more computer operating systems that implement service processing by using a process (process), for example, a Linux operating system, a Unix operating system, an Android operating system, an iOS operating system, or a Windows operating system. The application layer may include applications such as a browser, an address book, word processing software, and instant messaging software.

A specific structure of an execution body of the method provided in embodiments of this application is not particularly limited in embodiments of this application, provided that communication can be performed according to the method provided in embodiments of this application by running a program that records code of the method provided in embodiments of this application. For example, the execution body of the method provided in embodiments of this application may be a terminal device or a satellite, or may be a functional module that is in the terminal device or the satellite and that can invoke a program and execute the program.

Aspects or features in embodiments of this application may be implemented as a method, an apparatus, or a product that uses standard programming and/or engineering technologies. As used herein, the term "artificial article" may encompass a computer program accessible from any computer-readable device, carrier, or medium. For example, a computer-readable medium may include, but is not limited to: a magnetic storage device (for example, a hard disk, a floppy disk, or a magnetic tape), an optical disc (for example, a compact disc (compact disc, CD), a digital versatile disc (digital versatile disc, DVD), or the like), a smart card, and a flash memory device (for example, an erasable programmable read-only memory (erasable programmable read-only memory, EPROM), a card, a stick, or a key drive).

The various storage media described herein may represent one or more devices and/or other machine-readable media for storing information. The term "machine-readable medium" may include, but is not limited to: radio channels and various other media capable of storing, containing, and/or carrying instructions and/or data.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should further be noted that the memory described herein is intended to include, but is not limited to, these and any other appropriate type of memory.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in embodiments of this application, it should be understood that the disclosed system, apparatus and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of embodiments of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in embodiments of this application shall fall within the protection scope of this application. Therefore, the protection scope of this application shall be subject to the protection scope of the claims.

## Claims

1. A communication method, comprising:
sending, by a terminal device, first indication information, wherein the first indication information indicates first duration, and the first duration comprises duration in which the terminal device does not perform open-loop timing advance adjustment and/or open-loop frequency offset adjustment; and
receiving, by the terminal device, second indication information, wherein the second indication information indicates a first window, the first window is determined based on the first duration, and the first window is used for channel estimation.

2. The method according to claim 1, wherein the first window comprises at least one second window;
the second window is used for channel estimation, and the second window is determined based on the first duration; and
a time period other than the second window in the first window further comprises a time period used for open-loop timing advance adjustment and/or open-loop frequency offset adjustment.

3. A communication method, comprising:
sending, by a terminal device, first indication information, wherein the first indication information indicates first duration, and the first duration is duration in which the terminal device does not perform open-loop timing advance adjustment and/or open-loop frequency offset adjustment; and
receiving, by the terminal device, fourth indication information, wherein the fourth indication information indicates a configuration of a first window, the first window is used for channel estimation, and the first window is divided into at least one second window based on the first duration, wherein
the second window is used for channel estimation; and
a time period other than the second window in the first window further comprises a time period used for open-loop timing advance adjustment and/or open-loop frequency offset adjustment.

4. The method according to any one of claims 1 to 3, wherein the method further comprises:
determining, by the terminal device, the first duration based on a relative location between the terminal device and a satellite.

5. The method according to any one of claims 1 to 4, wherein the method further comprises:
receiving, by the terminal device, third indication information, wherein the third indication information indicates the terminal device to report the duration in which the terminal device does not perform open-loop timing advance adjustment and/or open-loop frequency offset adjustment; and
the sending, by a terminal device, first indication information comprises:
sending, by the terminal device, the first indication information based on the third indication information.

6. A communication method, comprising:
receiving, by a network device, first indication information, wherein the first indication information indicates first duration, and the first duration comprises duration in which a terminal device does not perform open-loop timing advance adjustment and/or open-loop frequency offset adjustment;
determining, by the network device, a first window based on the first duration, wherein the first window is used for channel estimation; and
sending, by the network device, second indication information to the terminal device, wherein the second indication information indicates the first window.

7. The method according to claim 6, wherein the method further comprises:
sending, by the network device, third indication information to the terminal device, wherein the third indication information indicates the terminal device to report the duration in which the terminal device does not perform open-loop timing advance adjustment and/or open-loop frequency offset adjustment.

8. The method according to claim 6 or 7, wherein the determining, by the network device, a first window based on the first duration comprises:
determining, by the network device, the first window based on the first duration, second duration, and third duration, wherein the second duration comprises duration in which the terminal device maintains phase continuity of a sending signal, and the third duration comprises duration in which the terminal device maintains constancy of transmit power.

9. The method according to claim 8, wherein the determining, by the network device, the first window based on the first duration, second duration, and third duration comprises:
duration of the first window is a smallest one of the following values: the first duration, the second duration, and the third duration.

10. The method according to any one of claims 6 to 9, wherein the first window comprises at least one second window;
the second window is used for channel estimation, and a size of the second window is less than or equal to the first duration; and
a time period other than the second window in the first window further comprises a time period used for open-loop timing advance adjustment and/or open-loop frequency offset adjustment.

11. A communication method, comprising:
determining, by a network device, a first window, wherein the first window is used for channel estimation;
receiving, by the network device, first indication information, wherein the first indication information indicates first duration, and the first duration comprises duration in which a terminal device does not perform open-loop timing advance adjustment and/or open-loop frequency offset adjustment;
dividing, by the network device, the first window based on the first duration, to determine at least one second window, wherein the second window is used for channel estimation;
a time period other than the second window in the first window further comprises a time period used for open-loop timing advance adjustment and/or open-loop frequency offset adjustment; and
sending, by the network device, fourth indication information to the terminal device, wherein the fourth indication information indicates a configuration of the first window.

12. The method according to claim 11, wherein the method further comprises:
sending, by the network device, third indication information to the terminal device, wherein the third indication information indicates the terminal device to report the duration in which the terminal device does not perform open-loop timing advance adjustment and/or open-loop frequency offset adjustment.

13. The method according to claim 11 or 12, wherein the dividing, by the network device, the first window based on the first duration comprises:
dividing, by the network device, the first window based on the first duration, second duration, and third duration, wherein the second duration comprises duration in which the terminal device maintains phase continuity of a sending signal, and the third duration comprises duration in which the terminal device maintains constancy of transmit power.

14. The method according to claim 13, wherein the dividing, by the network device, the first window based on the first duration, second duration, and third duration comprises:
duration of the first window is a smallest one of the following values: the first duration, the second duration, and the third duration.

15. A communication apparatus, comprising:
a sending unit, configured to send first indication information, wherein the first indication information indicates first duration, and the first duration comprises duration in which the terminal device does not perform open-loop timing advance adjustment and/or open-loop frequency offset adjustment; and
a receiving unit, configured to receive second indication information, wherein the second indication information indicates a first window, the first window is determined based on the first duration, and the first window is used for channel estimation.

16. The apparatus according to claim 15, wherein the first window comprises at least one second window;
the second window is used for channel estimation, and the second window is determined based on the first duration; and
a time period other than the second window in the first window further comprises a time period used for open-loop timing advance adjustment and/or open-loop frequency offset adjustment.

17. A communication apparatus, comprising:
a sending unit, configured to send first indication information, wherein the first indication information indicates first duration, and the first duration is duration in which the terminal device does not perform open-loop timing advance adjustment and/or open-loop frequency offset adjustment; and
a receiving unit, configured to receive fourth indication information, wherein the fourth indication information indicates a configuration of a first window, the first window is used for channel estimation, and the first window is divided into at least one second window based on the first duration, wherein
the second window is used for channel estimation; and
a time period other than the second window in the first window further comprises a time period used for open-loop timing advance adjustment and/or open-loop frequency offset adjustment.

18. The apparatus according to any one of claims 15 to 17, wherein the apparatus further comprises:
a processing unit, configured to determine the first duration based on a relative location between the terminal device and a satellite.

19. The apparatus according to any one of claims 15 to 18, further comprising:
the receiving unit is further configured to receive third indication information, wherein the third indication information indicates the terminal device to report the duration in which the terminal device does not perform open-loop timing advance adjustment and/or open-loop frequency offset adjustment; and
that the sending unit is further configured to send first indication information comprises:
the sending unit is further configured to send the first indication information based on the third indication information.

20. A communication apparatus, comprising:
a receiving unit, configured to receive first indication information, wherein the first indication information indicates first duration, and the first duration comprises duration in which a terminal device does not perform open-loop timing advance adjustment and/or open-loop frequency offset adjustment;
a processing unit, configured to determine a first window based on the first duration, wherein the first window is used for channel estimation; and
a sending unit, configured to send second indication information to the terminal device, wherein the second indication information indicates the first window.

21. The apparatus according to claim 20, further comprising:
the sending unit is further configured to send third indication information to the terminal device, wherein the third indication information indicates the terminal device to report the duration in which the terminal device does not perform open-loop timing advance adjustment and/or open-loop frequency offset adjustment.

22. The apparatus according to claim 20 or 21, wherein that the processing unit determines a first window based on the first duration comprises:
the processing unit determines the first window based on the first duration, second duration, and third duration, wherein the second duration comprises duration in which the terminal device maintains phase continuity of a sending signal, and the third duration comprises duration in which the terminal device maintains constancy of transmit power.

23. The apparatus according to claim 22, wherein that the processing unit determines the first window based on the first duration, second duration, and third duration comprises:
duration of the first window is a smallest one of the following values: the first duration, the second duration, and the third duration.

24. The apparatus according to any one of claims 20 to 23, wherein the first window comprises at least one second window;
the second window is used for channel estimation, and a size of the second window is less than or equal to the first duration; and
a time period other than the second window in the first window further comprises a time period used for open-loop timing advance adjustment and/or open-loop frequency offset adjustment.

25. A communication apparatus, comprising:
a processing unit, configured to determine a first window, wherein the first window is used for channel estimation;
a receiving unit, configured to receive first indication information, wherein the first indication information indicates first duration, and the first duration comprises duration in which a terminal device does not perform open-loop timing advance adjustment and/or open-loop frequency offset adjustment, wherein
the processing unit divides the first window based on the first duration, to determine at least one second window, wherein the second window is used for channel estimation; and
a time period other than the second window in the first window further comprises a time period used for open-loop timing advance adjustment and/or open-loop frequency offset adjustment; and
a sending unit, configured to send fourth indication information to the terminal device, wherein the fourth indication information indicates a configuration of the first window.

26. The apparatus according to claim 25, further comprising:
the sending unit sends third indication information to the terminal device, wherein the third indication information indicates the terminal device to report the duration in which the terminal device does not perform open-loop timing advance adjustment and/or open-loop frequency offset adjustment.

27. The apparatus according to claim 25 or 26, wherein that the processing unit divides the first window based on the first duration comprises:
the network device divides the first window based on the first duration, second duration, and third duration, wherein the second duration comprises duration in which the terminal device maintains phase continuity of a sending signal, and the third duration comprises duration in which the terminal device maintains constancy of transmit power.

28. The apparatus according to claim 27, wherein that the processing unit divides the first window based on the first duration, second duration, and third duration comprises:
duration of the first window is a smallest one of the following values: the first duration, the second duration, and the third duration.

29. A computer-readable storage medium, wherein the computer-readable storage medium stores a computer program, and the computer program enables a terminal device to perform
the method according to claim 1 or 2, or
the method according to any one of claims 3 to 5.

30. A computer-readable storage medium, wherein the computer-readable storage medium stores a computer program, and the computer program enables a network device to perform
the method according to any one of claims 6 to 10, or
the method according to any one of claims 11 to 14.

31. A computer program product, wherein the computer program product comprises computer program code, and when the computer program code is run by a terminal device, the terminal device is enabled to perform
the method according to claim 1 or 2, or
the method according to any one of claims 3 to 5.

32. A computer program product, wherein the computer program product comprises computer program code, and when the computer program code is run by a network device, the network device is enabled to perform
the method according to any one of claims 6 to 10, or
the method according to any one of claims 11 to 14.

33. A chip system, comprising a communication interface and a processing circuit, wherein the communication interface is configured to obtain to-be-processed data, and the processing circuit is configured to process the to-be-processed data according to the method according to claim 4.

34. A chip system, comprising a communication interface and a processing circuit, wherein the communication interface is configured to send indication information according to the method according to any one of claims 6 to 10 or claims 11 to 14, and the processing circuit is configured to generate the indication information.

35. A communication system, comprising a terminal device and a network device, wherein the terminal device is configured to perform the method according to any one of claims 1 to 5, and the network device is configured to perform the method according to any one of claims 6 to 14.
